**Europäisches Patentamt**

**European Patent Office**

**Office européen des brevets**

(11) Publication number: **0 174 048**
**B1**

(12) **EUROPEAN PATENT SPECIFICATION**

(45) Date of publication of patent specification: **06.06.90**

(21) Application number: **85201371.3**

(22) Date of filing: **30.08.85**

(51) Int. Cl.⁵: **G 06 F 7/552**

(54) **Digital root extraction circuit.**

(30) Priority: **07.09.84 NL 8402740**

(43) Date of publication of application:
**12.03.86 Bulletin 86/11**

(45) Publication of the grant of the patent:
**06.06.90 Bulletin 90/23**

(84) Designated Contracting States:
**DE FR GB IT**

(56) References cited:
**KAI HWANG: "Computer Arithmetic. Principles,
Architecture and Design", 1979, pages 42-43,
360-362, J. Wiley and sons, New York, US.
JOURNAL OF THE INSTITUION OF
TELECOMMUNICATION ENGINEERS, vol. 19,
no. 4, April 1973, pages 169-170, IN; S.
BANDYOPADHYAY et al.: "An iterative cellular
array for non-restoring square root extraction"**

(73) Proprietor: **N.V. Philips' Gloeilampenfabrieken
Groenewoudseweg 1
NL-5621 BA Eindhoven (NL)**

(72) Inventor: **De Troye, Nicolaas Cornelis
c/o INT. OCTROOIBUREAU B.V. Prof. Holstlaan 6
NL-5656 AA Eindhoven (NL)**

(74) Representative: **Faessen, Louis Marie Hubertus
et al
INTERNATIONAAL OCTROOIBUREAU B.V. 6
Prof. Holstlaan
NL-5656 AA Eindhoven (NL)**

Courier Press, Leamington Spa, England.

## Description

The invention relates to a digital root extraction circuit as defined in the preamble of Claim 1.

A root extraction circuit of this kind is known from the book "Computer Arithmetic: Principles, Architecture and Design", by Kai Hwang, published by John Wiley & Sons. The root extraction circuit is described in chapter 11, section 2, pages 360—2 and is realised by means of so-called controllable add/subtract cells (CAS.cells) which are described in the same book in chapter 2, section 3, pages 42—3. The construction of the root extraction circuit is based on an algorithm which is described on said pages 360—2; according to this algorithm, signals must be inverted in some locations in the root extraction circuit before they can be applied to a CAS cell. However, the inverter circuits required for inverting the signals disturb the regular pattern of the CAS cells which would be feasible if only the CAS cells were integrated. The fact that the inverter circuits are required and that they disturb a feasible regular pattern for integration is found to be very disadvantageous.

It is the object of the invention to provide a root extraction circuit which does not require inverter circuits and in which no circuits are required other than the CAS cells.

To this end, a root extraction circuit in accordance with the invention is characterized in that in each $m^{th}$ sub-circuit the two CAS cells for the processing of the bit signals having a significance $(-2m+1)$ and $-2m$ receive the bianry value 1 (one) on their second data input and the binary value 0 (zero) on their control input. The root extraction circuit in accordance with the invention does not require inverter circuits or other circuits for extracting the root of a binary number, thus allowing for a very regular pattern of CAS cells to be obtained when the root extraction circuit in accordance with the invention is integrated on a semiconductor substrate.

It is to be noted that in the Journal of the Institution of Telecommunication Engineers, Vol. 19, No. 4, April 1973, pages 169—170, S. Bandyopadhyay et al.: "An iterative cellular array for non-restoring square root extraction", a root extraction circuit is described with uniform cells and not requiring inverter circuits. The cells however are not CAS cells; they have a much more complex structure.

An embodiment in accordance with the invention will be described in detail hereinafter with reference to the accompanying drawings, therein:

Figure 1 shows a controllable add/subtract cell, and

Figure 2 shows a root extraction circuit in accordance with the invention.

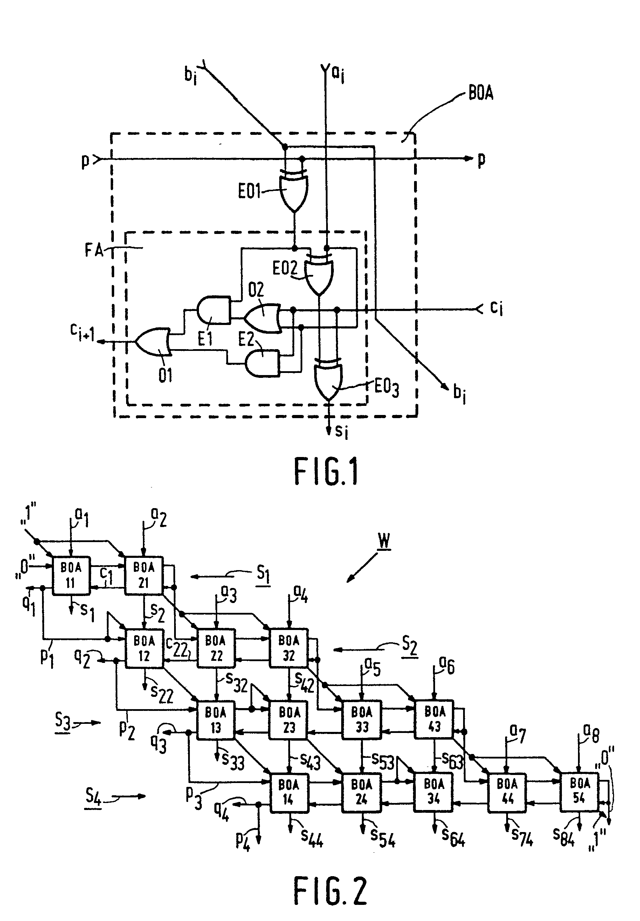

The controllable add/subtract circuit BOA shown in Figure 1 includes a known full-adder circuit FA and a further exclusive OR-gate E01. The full-adder circuit FA comprises a second and a third exclusive OR-gate E02 and E03, respectively, a first and second AND-gate, E1 and E2, respectively, and a first and a second OR-gate, 01 and 02, respectively. The circuit BOA receives four signals $a_i$, $b_i$, $c_i$ and p which represent a first and a second binary signal to be processed, a carry signal and a control signal, respectively. When the signal p equals a logic "zero" signal, the circuit BOA operates as a full adder circuit. When the signal p is a logic "one", the circuit BOA operates as a subtract circuit, the signals $c_{i+1}$ and $c_i$ then meaning "borrow-in" and "borrow-out". The relation between input signals and output signals of the circuit BOA can be expressed in the following Boolean equation:

$$s_i = a_i \oplus (b_i \oplus p) \oplus c_i$$
$$c_{i+1} = (a_i + c_i) \cdot (b_i \oplus p) + a_i \cdot c_i.$$

Figure 2 shows a root extraction circuit $W$ in accordance with the invention which is composed of a number of sub-circuits S1, S2, S3 and S4 which include 2, 3, 4 and 5 controllable add/subtract cells BOA, respectively. For the sake of clarity it is to be noted that the signal inputs and outputs of each add/subtract circuit $BOA_{ij}$ ($1 \leqslant j \leqslant 4$; $i \leqslant j+1$) are always shown in the same location and the same orientation as shown approximately in Figure 1 and in the same way in said literature. In accordance with the invention, all circuits BOA11, 21, 22, 32; 33, 43, 44, 54, which receive a binary signal on the input $a_i$, receive a binary signal having the logic value "1" (one) on their input for the signal $b_i$, and the logic value "0" (zero) on their control input (for the signal p). The outputs $q_1$, $q_2$, $q_3$ and $q_4$ form the carry signal outputs of the circuits BOA 11, 12, 13, 14 and the output of the root extraction circuit W. On the outputs $q_1$ to $q_4$ the root $0 \cdot q_1 q_2 q_3 q_4$ is obtained of a binary number $0 \cdot a_1 a_2 a_3 a_4 a_5 a_6 a_7 a_8$ presented to the circuit W.

As described in said publication, the number (0.)01 is subtracted from the number combination $0 \cdot a_1 a_2$ during a first operation when the square root is extracted of a binary number $A = 0 \cdot a_1 a_2 a_3 \ldots a_{2n}$. When the remainder $R_1$ is positive, $q_1 = 1$ and the binary number $0 \cdot q_1 01$ is subtracted from the combination $0 \cdot R_1 a_3 a_4$. When the remainder $R_1$ is negative, $q_1 = 0$ and the binary number $0 \cdot q_1 \cdot 11$ is added to the combination $R_1 \cdot a_3 a_4$. It can be deduced that for a $k^{th}$ step the following calculations are required for determining the $k^{th}$ bit of the square root of the number A.

$$R_{k+1} = 0 \cdot R_k \cdot a_{2k+1} \cdot a_{2k+2} - 0 \cdot q_1 q_2 \ldots q_k \cdot 01;$$
if $q_k = 1$
$$R_{k+1} = 0 \cdot R_k \cdot a_{2k+1} \cdot a_{2k+2} + 0 \cdot q_1 q_2 \ldots q_k \cdot 11;$$
if $q_k = 0$.

The foregoing means that, depending on the last bit $q_k$ of the root found, either an addition or a subtraction must take place. The first formula ($q_k = 1$, so that a subtraction must be performed) can be rewritten, however, in the two's-complement notation as:

$$R_{k+1}=0 \cdot R_k \cdot a_{2k+1}a_{2k+2}+0 \cdot \overline{q}_1 \cdot \overline{q}_2 \ldots \overline{q}_k \cdot 11$$
$(q_k=1)$.

Furthermore it held good that:

$$R_{k+1}=0 \cdot R_k \cdot a_{2k+1} \cdot a_{2k+2}+0 \cdot q_1q_2 \ldots q_k \cdot 11$$
$(q_k=0)$.

It can be understood from the above two formulae that the two add/subtract cells BOA (k, k) and BOA (k+1, k) of a sub-circuit k always receive a logic signal "1" on their "b" signal input, that their control signal inputs always receive a logic signal "0" (these cells BOA must always add), and that the remaining add/subtract cells BOA of a sub-circuit k are controlled by the last bit $q_{k-1}$ formed (of the root to be determined) from the preceding sub-circuit k−1.

It is to be noted that in the binary root extraction circuit the A/S-circuits BOA21, 32, 43, 54 (as shown in Figure 2) receive on their $b_i$-input (see Figure 1) always a binary "1" and on their p- as well as on their $c_i$-input (see Figure 1) always a binary "0". The output of Exclusive OR-gate E01 always provides a binary "1". So the outputs of Exclusive OR-gates E02 and E03 each provide the signal $\overline{a}_i$ as the gates E02 and E03 receive a binary "1" and a binary "0" (=$c_i$) respectively. The output of OR-gate 02 will be the signal $a_i$, whilst the output of AND-gate E2 will be a binary "0". As the output of AND-gate E1 is $a_i$ the output of OR-gate 01 will be $a_i$. So all the A/S-circuits $BOA_{k+1,k}$ (k=1, 2, 3, 4, ...) can each completely be substituted by a single inverter, which saves substantially semiconductor area on which the root extraction circuit is to be integrated.

From the above it will also be clear that the Exclusive OR-gate E01 of all A/S-circuits $BOA_{kk}$ (k=1, 2, 3, 4, ...) can be dispensed with, if the binary 1 (signal $b_i$) is fed directly to the inputs of Exclusive OR-gate E02 and of AND-gate E1 (in fact that the A/S-circuit $BOA_{kk}$ is then reduced to a straight full-adder). However the input signal of the AND-gate E1 is always "1", thus the output of gate 02 can better be directly connected to the OR-gate 01, whilst the AND-gate E1 can be dispensed with. Instead of an EXOR-gate E02 a single inverter can be used.

Further it is to be noted that the A/S-circuits $BOA_{12}$, $BOA_{23}$, ..., $BOA_{k-1,k}$ receive the same signal on the $b_i$ and on the p-input (see Figure 2). This means that the output of Exclusive OR-gate E01 is always binary "0". As a result the output of gate E02 will always be $a_i$, thus gate E02 can be dispensed with, if signal $a_i$ is fed directly to Exclusive OR-gate E03. As the output of E01 would always be "0" the AND-gate E1 will never change its output from binary "0". So the AND-gate E1 and the OR-gates 01 and 02 can be deleted if the output of AND-gate E2 is connected to lead $c_{i+1}$.

So in its further reduced embodiment, which means that a minimum integration area on a semiconductor chip is used, the circuits $BOA_{k+1,k}$ are just single inverters, the circuits $BOA_{k,k}$ com-

prise nothing but the OR-gates 01, 02, the AND-gate E2, the EXOR-gate E03 and an inverter (instead of EXOR-gate E02) whereas the circuits $BOA_{k-1,k}$ comprise the AND-gate E2 and the EXOR-gate E03 only. It should be noted that the interconnection between the control input p and the data signal input $b_i$ of the circuit $BOA_{k-1,k}$ and the carry signal output $q_{k-1}$ of the circuit $BOA_{1,k-1}$ is not necessary anymore in said further reduced embodiment, but the carry signal output $q_{k-1}$ should be directly connected to the $b_i$ data input of the circuit $BOA_{k-1,k+1}$.

## Claims

1. A digital root extraction circuit for determining the square root of a 2n-bit binary number, the bit significance thereof decreasing from −1 to −2n, which circuit comprises logic, controllable add/subtract cells (CAS cells), each of which comprises a first data input ($a_i$), a second data input ($b_i$), a control input (p) to control complementing or not of the second input ($b_i$), a carry signal input ($c_i$), a carry signal output ($c_{i+1}$) and a sum signal output ($s_i$), which root extraction circuit comprises n sub-circuits ($S_1, \ldots, S_n$), an $m^{th}$ sub-circuit ($S_m$) thereof comprising m+1 CAS cells, ($S_{1,m}, \ldots, S_{m+1,m}$), where $1 \leq m \leq n$, the carry signal output ($c_{i+1}$) of a CAS cell for the processing of bit signals of a given significance being connected to the carry signal input ($c_i$) of a CAS cell for the processing of bit signals of a next-higher significance in the same sub-circuit, the carry signal output ($c_{i+1}$) of a CAS cell for the processing of bit signals having a significance −m in the $m^{th}$ sub-circuit forming an $m^{th}$ output of the root extraction circuit for an output bit having a significance −m, a first data input ($a_i$) of an (m−i)$^{th}$ CAS cell in an $m^{th}$ sub-circuit being connected to the sum signal output ($s_i$) of an (m−i+1)$^{th}$ CAS cell in the (m−1)$^{th}$ sub-circuit, where $1 \leq i \leq m$, a second data input ($b_i$) of an (m−i)$^{th}$ CAS cell in an $m^{th}$ sub-circuit being connected to the (m−i)$^{th}$ output of the root extraction circuit, where $1 \leq i < m$, a control input (p) of at least the CAS cells in an $m^{th}$ sub-circuit whose first data input ($a_i$) is connected to a sum signal output ($s_i$) of a CAS cell of an (m−1)$^{th}$ sub-circuit, being connected to the (m−1)$^{th}$ output of the root extraction circuit, the $m^{th}$ and the m+1$^{th}$ CAS cell of the $m^{th}$ sub-circuit receiving bit signals having a significance −2m+1 and −2m, respectively, on their first data input ($a_i$), the control input (p) of the m+1$^{th}$ CAS cell being connected to its carry signal input ($c_i$), characterized in that in each $m^{th}$ sub-circuit the two CAS cells for the processing of the bit signals having a significance −2m+1 and −2m receive the binary value 1 (one) on their second data input ($b_i$), and the binary value 0 (zero) on their control input (p).

2. A digital root extraction circuit for determining the square root of a 2n-bit binary number, the bit significance thereof decreasing from −1 to −2n, which circuit comprises logic, controllable add/subtract cells (CAS cells), each of which comprises a first data input ($a_l$), a second data input ($b_l$), a control input (p) to control complementing or not of the second input ($b_l$), a carry signal input ($c_i$), a carry signal output ($c_{i+1}$) and a sum signal output ($s_i$), which root extraction circuit comprises n sub-circuits ($S_1, \ldots, S_n$), an $m^{th}$ sub-circuit ($S_m$) thereof comprising m CAS cells ($S_{1,m}, \ldots, S_{m,m}$), where $1 \leq m \leq n$, the carry signal output ($c_{i+1}$) of a CAS cell for the processing of bit signals of a given significance being connected to the carry signal input ($c_i$) of a CAS cell for the processing of bit signals of a next-higher significance in the same sub-circuit, the carry signal output ($c_{i+1}$) of a CAS cell for the processing of bit signals having a significance $-m$ in the $m^{th}$ sub-circuit forming an $m^{th}$ output of the root extraction circuit for an output bit having a significance $-m$, a first data input ($a_l$) of an $(m-i)^{th}$ CAS cell in an $m^{th}$ sub-circuit being connected to the sum signal output ($s_i$) of an $(m-i+1)^{th}$ CAS cell in the $(m-1)^{th}$ sub-circuit, where $2 \leq i < m$, a second data input ($b_l$) of an $(m-i)^{th}$ CAS cell in an $m^{th}$ sub-circuit being connected to the $(m-i)^{th}$ output of the root extraction circuit, where $1 \leq i < m$, a control input (p) of at least the CAS cells in an $m^{th}$ sub-circuit whose first data input ($a_l$) is connected to a sum signal output ($s_i$) of a CAS cell of an $(m-1)^{th}$ sub-circuit, being connected to the $(m-1)^{th}$ output of the root extraction circuit, the $m^{th}$ CAS cell of the $m^{th}$ sub-circuit receiving a bit signal having a significance $-2m+1$ on the first data input ($a_l$), characterized in that in each $m^{th}$ sub-circuit the CAS cell for the processing of the bit signals having a significance $-2m+1$ receives the binary value 1 (one) on its second data input ($b_l$), and the binary value 0 (zero) on its control input (p), whereas each $m^{th}$ sub-circuit includes an inverter, which receives the bit signal having a significance $-2m$ on its input, which is also connected to the carry signal input ($c_i$) of the $m^{th}$ CAS cell of the $m^{th}$ sub-circuit, the output of the inverter being connected to the first data input ($a_l$) of the $(m)^{th}$ CAS cell of the $(m+1)^{th}$ sub-circuit.

3. A digital root extraction circuit for determining the square root of a 2n-bit binary number, the bit significance thereof decreasing from $-1$ to $-2n$, which circuit comprises logic, controllable add/subtract cells (CAS cells), each of which comprises a first data input ($a_l$), a second data input ($b_l$), a control input (p) to control complementing or not of the second input ($b_l$), a carry signal input ($c_i$), a carry signal output ($c_{i+1}$) and a sum signal output ($s_i$), which root extraction circuit comprises n sub-circuits ($S_1, \ldots, S_n$), an $m^{th}$ sub-circuits ($S_m$) thereof comprising $m-2$ CAS cells ($S_{1,m}, \ldots, S_{m-2,m}$), where $3 \leq m \leq n$, the carry signal output ($c_{i+1}$) of a CAS cell for the processing of bit signals of a given significance being connected to the carry signal input ($c_i$) of a CAS cell for the processing of bit signals of a next-higher significance in the same sub-circuit, the carry signal output ($c_{i+1}$) of a CAS cell for the processing of bit signals having a significance $-m$ in the $m^{th}$ sub-circuit forming an $m^{th}$ output of the root extraction circuit for an output bit having a significance $-m$, a first data input ($a_l$) of an $(m-i)^{th}$ CAS cell in an $m^{th}$ sub-circuit being connected to the sum signal output ($s_i$) of an $(m-i+1)^{th}$ CAS cell in the $(m-1)^{th}$ sub-circuit, where $2 \leq i < m$, a second data input ($b_l$) of an $(m-i)^{th}$ CAS cell in an $m^{th}$ sub-circuit being connected to the $(m-i)^{th}$ output of the root extraction circuit, where $2 \leq i < m$, a control input (p) of at least the CAS cells in an $m^{th}$ sub-circuit whose first data input ($a_l$) is connected to a sum signal output ($s_i$) of a CAS cell of an $(m-1)^{th}$ sub-circuit, being connected to the $(m-1)^{th}$ output of the root extraction circuit, characterized in that, a first sub-circuit ($S_1$), comprises a first and a second logic cell and all further sub-circuits ($S_2, \ldots, S_n$) comprise a first, a second and a third logic cell, each third logic cell comprising and AND-gate (E2) and an Exclusive OR-gate (E03), of which the inputs are connected in parallel, the output of the AND-gate (E2) of the third logic cell in the second sub-circuit ($S_2$) is the second output of the root extraction circuit and is connected to the control input (p) of the first CAS cell of the third sub-circuit ($S_3$) the output of the AND-gate (E2) of the third logic cell in the $m^{th}$ sub-circuit is connected to the carry signal input ($c_i$) of the $(m-2)^{th}$ CAS cell of the $m^{th}$ sub-circuit with $m>2$, the output of the Exclusive OR-gate (E03) of the third logic cell in the $m^{th}$ sub-circuit is connected to the first data input ($a_l$) of the $(m-2)^{th}$ CAS cell in the $(m+1)^{th}$ sub-circuit with $m>2$, whereas a first and a second input of the gates of the third logic cell in the $m^{th}$ sub-circuit are connected respectively to the output of the second logic cell of the $m^{th}$ sub-circuit and to the output of the first logic cell of the $(m-1)^{th}$ sub-circuit, whereas the first logic cell of the $m^{th}$ sub-circuit comprises only an inverter, which receives the bit signal having a significance $-2m$ and the output of which is connected to the inputs of the gates of the third logic cell in the $(m+1)^{th}$ sub-circuit where $1 \leq m \leq n$, whereas the second logic cell of the $m^{th}$ sub-circuit comprises an inverter, which receives the bit signal having a significance $-2m+1$, and further comprises a first OR-gate (02), an AND-gate (E2) and an Exclusive OR-gate (E03), of which the inputs of the OR-gate (02) and the AND-gate (E2) are connected in parallel and receive the bit signals of significance $-2m$ and $-2m+1$ respectively, whereas the inputs of the Exclusive OR-gate (E03) receive the output of the inverter and the bit signal of significance $-2m$ respectively, and whereas the output of the Exclusive OR-gate (E03) is connected to the $(m-1)^{th}$ CAS cell of the $(m+1)^{th}$ sub-circuit for $m>1$, and the outputs of the OR-gate (02) and the AND-gate (E2) are connected to inputs of a second OR-gate (01) of the second logic cell, the output of said second OR-gate (01) being connected to the gates of the third logic cell of the $m^{th}$ sub-circuit.

**Patentansprüche**

1. Digitale Wurzelziehschaltung zur Bestimmung der Quadratwurzel einer 2n-Bit-Binärzahl, deren Bitwertigkeit von −1 auf −2n abfällt, wobei diese Schaltung logische, steuerbare Additions/ Subtraktions-Elemente (sog. CAS-Elemente) enthält, von denen jedes Element einen ersten Dateneingang ($a_i$), einen zweiten Dateneingang ($b_i$), einen Steuereingang (p) zur Steuerung der möglichen Komplementierung des zweiten Eingangs ($b_i$), einen Übertragungssignaleingang ($c_i$), einen Übertragungssignalausgang ($c_{i+1}$) und einem Summensignalausgang ($s_i$) besitzt, und diese Wurzelziehschaltung n Unterschaltungen ($S_1, \ldots, S_n$) enthält, von denen eine m. Unterschaltung ($S_m$) m+1 CAS-Elemente ($S_{1,m}, \ldots, S_{m+1,m}$) besitzt, worin $1 \leq m \leq n$ ist, wobei der Übertragungssignalausgang ($c_{i+1}$) eines CAS-Elements zur Verarbeitung von Bitsignalen mit einer bestimmten Wertigkeit an den Übertragungssignaleingang ($c_i$) eines CAS-Elements zur Verarbeitung von Bitsignalen mit nächsthöherer Wertigkeit in derselben Unterschaltung angeschlossen wird, der Übertragungssignalausgang ($c_{i+1}$) eines CAS-Elements zur Verarbeitung von Bitsignalen mit einer Wertigkeit von −m in der m. Unterschaltung einen m. Ausgang der Wurzelziehschaltung für ein Ausgangsbit mit einer Wertigkeit von −m bildet, ein erster Dateneingang ($a_i$) eines (m−i). CAS-Elements in einer m. Unterschaltung an den Summensignalausgang ($s_i$) eines (m−i+1). CAS-Elements in der (m−1). Unterschaltung angeschlossen wird, worin $1 \leq i < m$ ist, ein zweiter Dateneingang ($b_i$) eines (m−i). CAS-Elements in einer m. Unterschaltung an den (m−i). Ausgang der Wurzelziehschaltung angeschlossen wird, worin $1 \leq i < m$ ist, ein Steuereingang (p) wenigstens der CAS-Elemente in einer m. Unterschaltung, deren erster Dateneingang ($a_i$) an einen Summensignalausgang ($s_i$) eines CAS-Elements einer (m−1). Unterschaltung angeschlossen ist, an den (m−1). Ausgang der Wurzelziehschaltung angeschlossen ist, die m. und m+1. CAS-Elemente der m. Unterschaltung Bitsignale mit einer Wertigkeit von −2m+1. −2m an ihrem ersten Dateneingang ($a_i$) empfangen, der Steuereingang (p) des m+1. CAS-Elements an seinen Übertragungssignaleingang ($c_i$) angeschlossen ist, dadurch gekennzeichnet, daß in jeder m. Unterschaltung die beiden CAS-Elemente zur Verarbeitung der bitsignale mit einer Wertigkeit von −2m+1 und −2m Binärwert 1 (eins) an ihrem zweiten Dateneingang ($b_i$) und den Binärwert 0 (Null) an ihrem Steuereingang (p) empfangen.

2. Digitale Wurzelziehschaltung zur Bestimmung der Quadratwurzel einer 2n-Bit-Binärzahl, deren Bitwertigkeit von −1 auf −2n abfällt, wobei diese Schaltung logische, steuerbare Additions/ Subtraktions-Elemente (sog. CAS-Elemente) enthält, von denen jedes Element einen ersten Dateneingang ($a_i$), einen zweiten Dateneingang ($b_i$), einen Steuereingang (p) zur Steuerung der möglichen Komplementierung des zweiten Eingangs ($b_i$), einen Übertragungssignaleingang ($c_i$), einen Übertragungssignalausgang ($c_{i+1}$) und einen Summensignalausgang ($s_i$) besitzt, und diese Wurzelziehschaltung n Unterschaltungen ($S_1, \ldots, S_n$) enthält, von denen eine m. Unterschaltung ($S_m$) m CAS-Elemente ($S_{1,m}, \ldots, S_{m,m}$) besitzt, worin $1 \leq m \leq$ ist, wobei der Übertragungssignalausgang ($c_{i+1}$) eines CAS-Elements zur Verarbeitung von Bitsignalen mit einer bestimmten Wertigkeit an den Übertragungssignaleingang ($c_i$) eines CAS-Elements zur Verarbeitung von Bitsignalen mit nächsthöherer Wertigkeit in derselben Unterschaltung angeschlossen wird, der Übertragungssignalausgang ($c_{i+1}$) eines CAS-Elements zur Verarbeitung von Bitsignalen mit einer Wertigkeit von −m in der m. Unterschaltung einen m. Ausgang der Wurzelziehschaltung für ein Ausgangsbit mit einer Wertigkeit von −m bildet, ein erster Dateneingang ($a_i$) eines (m−i). CAS-Elements in einer m. Unterschaltung an den Summensignalausgang ($s_i$) eines (m−i+1). CAS-Elements in der (m−1). Unterschaltung angeschlossen wird, worin $2 \leq i < m$ ist, ein zweiter Dateneingang ($b_i$) eines (m−i). CAS-Elements in einer m. Unterschaltung an den (m−i). Ausgang der Wurzelziehschaltung angeschlossen wird, worin $1 \leq i < m$ ist, ein Steuereingang (p) wenigstens der CAS-Elemente in einer m. Unterschaltung, deren erster Dateneingang ($a_i$) an einen Summensignalausgang ($s_i$) eines CAS-Elements einer (m−1). Unterschaltung angeschlossen ist, an den (m−1). Ausgang der Wurzelziehschaltung angeschlossen ist, das m. CAS-Element der m. Unterschaltung ein Bitsignal mit einer Wertigkeit von −2m+1 am ersten Dateneingang ($a_i$) empfängt, dadurch gekennzeichnet, daß in jeder m. Unterschaltung das CAS-Element zur Verarbeitung der Bitsignale mit einer Wertigkeit von −2m+1 den Binärwert 1 (eins) an seinem zweiten Dateneingang ($b_i$) und den Binärwert 0 (Null) an seinem Steuereingang (p) empfängt, während jede m. Unterschaltung eine Umkehrstufe enthält, die das Bitsignal mit einer Wertigkeit von −2m an seinem Eingang empfängt, der ebenfalls an den Übertragungssignaleingang ($c_i$) des m. CAS-Elements der m. Unterschaltung angeschlossen ist, der Ausgang der Umkehrstufe an den ersten Dateneingang ($a_i$) des m. CAS-Elements der (m+1). Unterschaltung angeschlossen ist.

3. Digitale Wurzelziehschaltung zur Bestimmung der Quadratwurzel einer 2/n-Bit-Binärzahl, deren Bitwertigkeit von −1 auf −2n abfällt, wobei diese Schaltung logische, steuerbare Additions/ Subtraktions-Elemente (sog. CAS-Elemente) enthält, von denen jedes Element einen ersten Dateneingang ($a_i$), einen zweiten Dateneingang ($b_i$), einen Steuereingang (p) zur Steuerung der möglichen Komplementierung des zweiten Eingangs ($b_i$), einen Übertragungssignaleingang ($c_i$), einen Übertragungssignalausgang ($c_{i+1}$) und einen Summensignalausgang ($s_i$) besitzt, und diese Wurzelziehschaltung n Unterschaltungen ($S_1, \ldots, S_n$) enthält, von denen eine m. Unterschaltung ($S_m$) m−2 CAS-Elemente ($S_{1,m}, \ldots, S_{m-2,m}$) besitzt, worin $3 \leq m \leq n$ ist, wobei der Übertragungssignalausgang ($c_{i+1}$) eines CAS-Elements zur Verarbeitung von Bitsignalen mit einer bestimmten Wertigkeit an den Übertragungssignaleingang ($c_i$) eines CAS-Elements zur Verarbeitung von Bitsignalen mit nächsthöherer Wertigkeit in derselben Unterschaltung angeschlossen wird, der Übertragungssignalausgang $(c_{i+1})$ eines CAS-Elements zur Verarbeitung von Bitsignalen mit einer Wertigkeit von $-m$ in der m. Unterschaltung einen m. Ausgang der Wurzelziehschaltung für ein Ausgangsbit mit einer Wertigkeit von $-m$ bildet, ein erster Dateneingang $(a_i)$ eines $(m-i)$. CAS-Elements in einer m. Unterschaltung an den Summensignalausgang $(s_i)$ eines $(m-i+1)$. CAS-Elements in der $(m-1)$. Unterschaltung angeschlossen wird, worin $2 \leq i < m$ ist, ein zweiter Dateneingang $(b_i)$ eines $(m-i)$. CAS-Elements in einer m. Unterschaltung an den $(m-i)$. Ausgang der Wurzelziehschaltung angeschlossen wird, worin $2 \leq i < m$ ist, ein Steuereingang $(p)$ wenigstens der CAS-Elemente in einer m. Unterschaltung, deren erster Dateneingang $(a_i)$ an einen Summensignalausgang $(s_i)$ eines CAS-Elements einer $(m-1)$. Unterschaltung angeschlossen ist, an den $(m-1)$. Ausgang der Wurzelziehschaltung angeschlossen ist, dadurch gekennzeichnet, daß eine erste Unterschaltung $(S_1)$ ein erstes und ein zweites logisches Element enthält, und alle weiteren Unterschaltungen $(S_2, ..., S_n)$ ein erstes, ein zweites und ein drittes logisches Element enthalten, wobei jedes dritte logische Element ein UND-Gatter (E2) sowie ein Exklusiv-ODER-Gatter (E03) enthält, deren Eingänge parallelgeschaltet sind, der Ausgang des UND-Gatters (E2) des dritten logischen Elements in der zweiten Unterschaltung $(S_2)$ der zweite Ausgang der Wurzelziehschaltung und an den Steuereingang $(p)$ des ersten CAS-Elements der dritten Unterschaltung $(S_3)$ angeschlossen ist, der Ausgang des UND-Gatters (E2) des dritten logischen Elements in der m. Unterschaltung an den Übertragungssignaleingang $(c_i)$ des $(m-2)$. CAS-Elements der m. Unterschaltung angeschlossen ist, wobei $m > 2$ ist, der Ausgang des Exklusiv-ODER-Gatters (E03) des dritten logischen Elements in der m. Unterschaltung an den ersten Dateneingang $(a_i)$ des $(m-2)$. CAS-Elements in der $(m+1)$. Unterschaltung angeschlossen ist, wobei $m > 2$ ist, während ein erster und ein zweiter Eingang der Gatter des dritten logischen Elements in der m. Unterschaltung an den Ausgang des zweiten logischen Elements der m. Unterschaltung bzw. an den Ausgang des ersten logischen Elements der $(m-1)$. Unterschaltung angeschlossen sind, während das erste logische Element der m. Unterschaltung lediglich eine Umkehrstufe enthält, die das Bitsignal mit einer Wertigkeit von $-2m$ empfängt und deren Ausgang an die Eingänge der Gatter des dritten logischen Elements in der $(m+1)$. Unterschaltung angeschlossen ist, worin $1 \leq m \leq n$ ist, während das zweite logische Element der m. Unterschaltung eine Umkehrstufe enthält, die das Bitsignal mit einer Wertigkeit von $-2m+1$ empfängt, und außerdem ein erstes ODER-Gatter (02), ein UND-Gatter (E2) und ein Exklusiv-ODER-Gatter (E03) enthält, von denen die Eingänge des ODER-Gatters (02) und des UND-Gatters (E2) parallelgeschaltet sind und die Bitsignale mit Wertigkeiten von $-2m$ bzw. $-2m+1$ empfangen, während die Eingänge des Exklusiv-ODER-Gatters (E03) das Ausgangssignal von der Umkehrstufe bzw. das Bitsignal mit einer Wertigkeit von $-2m$ empfangen, und während der Ausgang des Exklusiv-ODER-Gatters (E03) an das $(m-1)$. CAS-Element der $(m+1)$. Unterschaltung angeschlossen ist, worin $m > 1$ ist, und die Ausgänge des ODER-Gatters (02) und des UND-Gatters (E2) an Eingänge eines zweiten ODER-Gatters (01) des zweiten logischen Elements angeschlossen sind, und der Ausgang des zweiten ODER-Gatters (01) an die Gatter des dritten logischen Elements der m. Unterschaltung angeschlossen ist.

## Revendications

1. Circuit d'extraction de racine numérique pour déterminer la racine carrée d'un nombre binaire de 2n bits, dont la signification du bits va en diminuant de $-1$ à $-2n$, ce circuit comprenant des cellules d'addition/soustraction logiques pouvant être commandées (cellules CAS), comprenant chacune une première entrée de données $(a_i)$, une seconde entrée de données $(b_i)$, une entrée de commande $(p)$ pour commander la complémentation ou la non-complémentation de la seconde entrée $(b_i)$, une entrée de signal de report $(c_i)$, une sortie de signal de report $(c_{i+1})$ et une sortie de signal de somme $(s_i)$, ce circuit d'extraction de racine comprenant n sous-circuits $(S_1, ..., S_n)$, dont un $m^{\text{ième}}$ sous-circuit $(S_m)$ comprend $m+1$ cellules CAS $(S_{1,m}, ..., S_{m+1,m})$, où $1 \leq m \leq n$, la sortie de signal de report $(c_{i+1})$ d'une cellule CAS pour le traitement de signaux de bits d'une signification donnée étant connectée à l'entrée de signal de report $(c_i)$ d'une cellule CAS pour le traitement de signaux de bits d'un ordre de signification supérieur suivant dans le même sous-circuit, la sortie de signal de report $(c_{i+1})$ d'une cellule CAS pour le traitement de signaux de bits ayant une signification $-m^{\text{ième}}$ sous-circuit formant une $m^{\text{ième}}$ sortie du circuit d'extraction de racine pour un bit de sortie ayant un poids $-m$, une première entrée de données $(a_i)$ d'une $(m-i)^{\text{ième}}$ cellule CAS dans un $m^{\text{ième}}$ sous-circuit étant connectée à la sortie de signal de somme $(s_i)$ d'une $(m-i+1)^{\text{ième}}$ cellule CAS dans le $(m-1)^{\text{ième}}$ sous-circuit, où $1 \leq i < m$, une seconde entrée de données $(b_i)$ d'une $(m-i)^{\text{ième}}$ cellule CAS dans un $m^{\text{ième}}$ sous-circuit étant connectée à la $(m-i)^{\text{ième}}$ sortie du circuit d'extraction de racine, où $1 \leq i < m$, une entrée de commande $(p)$ d'au moins les cellules CAS dans un $m^{\text{ième}}$ sous-circuit dont la première entrée de données $(a_i)$ est connectée à une sortie de signal de somme $(s_i)$ d'une cellule CAS d'un $(m-1)^{\text{ième}}$ sous-circuit étant connectée à la $(m-1)^{\text{ième}}$ sortie du circuit d'extraction de racine, la $m^{\text{ième}}$ et la $(m+1)^{\text{ième}}$ cellule CAS du $m^{\text{ième}}$ sous-circuit recevant des signaux de bits ayant un poids $-2m+1$ et $-2m$, respectivement, sur leur première entrée de données $(a_i)$, l'entrée de commande $(p)$ de la $(m+1)^{\text{ième}}$ cellule CAS étant connectée à son entrée de signal de report $(c_i)$, caractérisé en ce

que, dans chaque $m^{\text{ième}}$ sous-circuit, les deux cellules CAS pour le traitement des signaux de bits ayant un poids $-2m+1$ et $-2m$ reçoivent la valeur binaire 1 (un) sur leur seconde entrée de données ($b_i$), et la valeur binaire 0 (zéro) sur leur entrée de commande (p).

2. Circuit d'extraction de racine numérique pour déterminer la racine carrée d'un nombre binaire de 2n bits, dont le poids des bits va en diminuant de $-1$ à $-2n$, ce circuit comprenant des cellules d'addition/soustraction logiques pouvant être commandées (cellules CAS), qui comprennent chacune une première entrée de données ($a_i$), une seconde entrée de données ($b_i$), une entrée de commande (p) pour commander la complémentation ou la non-complémentation de la seconde entrée ($b_i$), une entrée de signal de report ($c_i$), une sortie de signal de report ($c_{i+1}$) et une sortie de signal de somme ($s_i$), ce circuit d'extraction de racine comprenant n sous-circuits ($S_1$, ..., $S_n$), dont un $m^{\text{ième}}$ sous-circuit ($S_m$) comprend m cellules CAS ($S_{1,m}$, .., $S_{n,m}$) où $1 \leq m \leq n$, la sortie de signal de report ($c_{i+1}$) d'une cellule CAS pour le traitement de signaux de bits d'une signification donnée étant connectée à l'entrée de signal de report ($c_i$) d'une cellule CAS pour le traitement de signaux de bits d'un ordre de signification supérieur suivant dans le même sous-circuit, la sortie de signal de report ($c_{i+1}$) d'une cellule CAS pour le traitement de signaux de bits ayant une signification $-m$ dans le $m^{\text{ième}}$ sous-circuit formant une $m^{\text{ième}}$ sortie du circuit d'extraction de racine pour un bit de sortie ayant un poids $-m$, une première entrée de données ($a_i$) d'une $(m-i)^{\text{ième}}$ cellule CAS dans un $m^{\text{ième}}$ sous-circuit étant connectée à la sortie de signal de somme ($s_i$) d'une $(m-i+1)^{\text{ième}}$ cellule CAS dans le $(m-1)^{\text{ième}}$ sous-circuit, où $2 \leq i < m$, une seconde entrée de données ($b_i$) d'une $(m-i)^{\text{ième}}$ cellule CAS dans un $m^{\text{ième}}$ sous-circuit étant connectée à la $(m-i)^{\text{ième}}$ sortie du circuit d'extraction de racine, où $1 \leq i < m$, une entrée de commande (p) d'au moins les cellules CAS dans un $m^{\text{ième}}$ sous-circuit dont la première entrée de données ($a_i$) est connectée à une sortie de signal de somme ($s_i$) d'une cellule CAS d'un $(m-1)^{\text{ième}}$ sous-circuit étant connectée à la $(m-1)^{\text{ième}}$ sortie du circuit d'extraction de racine, la $m^{\text{ième}}$ cellule CAS du $m^{\text{ième}}$ sous-circuit recevant un signal de bit ayant un poids $-2m+1$ sur la première entrée de données ($a_i$), caractérisé en ce que, dans chaque $m^{\text{ième}}$ sous-circuit, la cellule CAS pour le traitement des signaux de bits ayant un poids $-2m+1$ reçoit la valeur binaire 1 (un) sur sa seconde entrée de données ($b_i$) et la valeur binaire 0 (zéro) sur son entrée de commande (p), tandis que chaque $m^{\text{ième}}$ sous-circuit comprend un inverseur qui reçoit le signal de bit ayant un poids $-2m$ sur son entrée, qui est également connectée à l'entrée de signal de report ($c_i$) de la $m^{\text{ième}}$ cellule CAS du $m^{\text{ième}}$ sous-circuit, la sortie de l'inverseur étant connectée à la première entrée de données ($a_i$) de la $(m)^{\text{ième}}$ cellule CAS du $(m+1)^{\text{ième}}$ sous-circuit.

3. Circuit d'extraction de racine numérique pour déterminer la racine carrée d'un nombre binaire de 2n bits, dont le poids des bits va en diminuant de $-1$ à $-2n$, de circuit comprenant des cellules d'addition/soustraction logiques pouvant être commandées (cellules CAS), qui comprennent chacune une première entrée de données ($a_i$), une seconde entrée de données ($b_i$), une entrée de commande (p) pour commander la complémentation ou la non-complémentation de la seconde entrée ($b_i$), une entrée de signal de report ($c_i$), une sortie de signal de report ($c_{i+1}$) et une sortie de signal de somme ($s_i$), ce circuit d'extraction de racine comprenant n sous-circuits ($S_1$, ..., $S_n$), dont un $m^{\text{ième}}$ sous-circuit ($S_m$) comprend $m-2$ cellules CAS ($s_{1,m}$, ..., $S_{m-2,m}$), où $3 \leq m \leq n$, la sortie de signal de report ($c_{i+1}$) d'une cellule CAS pour le traitement de signaux de bits d'une signification donnée étant connectée à l'entrée de signal de report ($c_i$) d'une cellule CAS pour le traitement de signaux de bits d'un ordre de signification supérieur suivant dans le même sous-circuit, la sortie de signal de report ($c_{i+1}$) d'une cellule CAS pour le traitement de signaux de bits ayant un poids $-m$ dans le $m^{\text{ième}}$ sous-circuit formant un $m^{\text{ième}}$ sortie du circuit d'extraction de racine pour un bit de sortie ayant un poids $-m$, une première entrée de données ($a_i$) d'une $(m-i)^{\text{ième}}$ cellule CAS dans un $m^{\text{ième}}$ sous-circuit étant connectée à la sortie de signal de somme ($s_i$) d'une $(m-i+1)^{\text{ième}}$ cellule CAS dans le $(m-1)^{\text{ième}}$ sous-circuit, où $2 \leq i < m$, une seconde entrée de données ($b_i$) d'une $(m-i)^{\text{ième}}$ cellule CAS dans un $m^{\text{ième}}$ sous-circuit étant connectée à la $(m-i)^{\text{ième}}$ sortie du circuit d'extraction de racine, où $2 \leq i < m$, une entrée de commande (p) d'au moins les cellules CAS dans un $m^{\text{ième}}$ sous-circuit dont la première entrée de données ($a_i$) est connectée à une sortie de signal de somme ($s_i$) d'une cellule CAS d'un $(m-1)^{\text{ième}}$ sous-circuit étant connectée à la $(m-1)^{\text{ième}}$ sortie du circuit d'extraction de racine, caractérisé en ce qu'un premier sous-circuit ($S_1$) comprend une première et une seconde cellule logique et tous les autres sous-circuits ($S_2$, ..., $S_n$) comprenant une première, une deuxième et une troisième cellule logique, chaque troisième cellule logique comprenant un circuit-porte ET (E2) et un circuit-porte OU exclusif (E03), dont les entrées sont connectées en parallèle, la sortie du circuit-porte ET (E2) de la troisième cellule logique dans le second sous-circuit ($S_2$) est la seconde sortie du circuit d'extraction de racine et est connectée à l'entrée de commande (p) de la première cellule CAS du troisième sous-circuit ($S_3$), la sortie du circuit-porte ET (E2) de la troisième cellule logique dans le $m^{\text{ième}}$ sous-circuit est connectée à l'entrée de signal de report ($c_i$) de la $(m-2)^{\text{ième}}$ cellule CAS du $m^{\text{ième}}$ sous-circuit, où $m > 2$, la sortie du circuit-porte OU exclusif (E03) de la troisième cellule logique dans le $m^{\text{ième}}$ sous-circuit est connectée à la première entrée de données ($a_i$) de la $(m-2)^{\text{ième}}$ cellule CAS dans le $(m+1)^{\text{ième}}$ sous-circuit, où $m > 2$, tandis qu'une première et une seconde entrée des circuits-portes de la troisième cellule logique dans le $m^{\text{ième}}$ sous-circuit sont connectées respectivement à la sortie de la seconde cellule logique du m$^{ième}$ sous-circuit et à la sortie de la première cellule logique du (m−1)$^{ième}$ sous-circuit, tandis que la première cellule logique du m$^{ième}$ sous-circuit ne comprend qu'un inverseur qui reçoit le signal de bit ayant une signification −zm et dont la sortie est connectée aux entrées des circuits-portes de la troisième cellule logique dans le (m+1)$^{ième}$ sous circuit, où 1≤m≤n, tandis que la seconde cellule logique du m$^{ième}$ sous-circuit comprend un inverseur qui reçoit le signal de bit ayant un poids −2m+1 et comprend, en outre, un premier circuit-porte OU (02), un circuit-porte ET (E2) et un circuit-porte OU exclusif (E03), les entrées du circuit-porte OU (02) et du circuit-porte ET (E2) étant connectées en parallèle et recevant les signaux de bits de poids −2m et −2m+1, respectivement, tandis que les entrées du circuit-porte OU exclusif (E03) reçoivent la sortie de l'inverseur et le signal de bit de poids −2m, respectivement et tandis que la sortie du circuit-porte OU exclusif (E03) est connectée à la (m−1)$^{ième}$ cellule CAS du (m+1)$^{ième}$ sous-circuit pour m>1, et que les sorties du circuit-porte OU (02) et du circuit-porte ET (E2) sont connectées aux entrées d'un second circuit-porte OU (01) de la seconde cellule logique, la sortie de ce second circuit-porte OU (01) étant connectée aux circuits-portes de la troisième cellule logique du m$^{ième}$ sous-circuit.

FIG.1

FIG.2

1